(19) Europäisches Patentamt
European Patent Office
Office européen des brevets

(11) **EP 4 475 047 A1**

(12) **EUROPÄISCHE PATENTANMELDUNG**

(43) Veröffentlichungstag:
**11.12.2024 Patentblatt 2024/50**

(21) Anmeldenummer: **23177606.3**

(22) Anmeldetag: **06.06.2023**

(51) Internationale Patentklassifikation (IPC):
**G06N 20/20** (2019.01)     **G06N 3/045** (2023.01)
**G06N 3/084** (2023.01)

(52) Gemeinsame Patentklassifikation (CPC):
**G06N 20/20; G06N 3/045;** G06N 3/084

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft
80333 München (DE)**

(72) Erfinder:
• **Holly, Stephanie
2000 Stockerau (AT)**
• **Kemnitz, Jana
1180 Wien (AT)**
• **Rezapour Lakani, Safoura
1210 Wien (AT)**
• **Schall, Daniel
2020 Hollabrunn (AT)**

(74) Vertreter: **Siemens Patent Attorneys
Postfach 22 16 34
80506 München (DE)**

(54) **COMPUTER-IMPLEMENTIERTES VERFAHREN UND SYSTEM ZUM BETRIEB EINES TECHNISCHEN GERÄTS**

(57)     Computer-implementiertes Verfahren zum Betrieb eines technischen Geräts (TD1) mit einem Modell auf Basis künstlicher Intelligenz durch ein System, umfassend einen Server und einen Klienten, und folgende Schritte vom Server ausgeführt werden:

a) Bereitstellen von Testdaten an den Server und Unterteilen der Testdaten in zumindest zwei Teilmengen,

b) Zuordnen der zumindest zwei Teilmengen zu in Form einer ersten Testdatenmenge und zumindest einer zweiten Testdatenmenge, wobei die erste Testdatenmenge im Verfahren bisher noch nicht zum Erzeugen einer Validierungs-Datenmenge herangezogen wurde,

c) Anwenden einer Kreuz-Validierungs-Operation auf die erste Testdatenmenge und Erzeugen der Validierungs-Datenmenge,

d) Erzeugen und Trainieren eines Teil-Modells auf Basis künstlicher Intelligenz mithilfe einer Trainings-Datenmenge,

e) Berechnen einer Genauigkeit des Teil-Modells mithilfe der Validierungs-Datenmenge,

f) Bestimmen der Gradienten der Modell-Parameter des Teil-Modells und Bestimmen zumindest eines ausgewählten Gradienten der Modell-Parameter des Teil-Modells als zumindest ein sensitiver Teil-Parameter für die Validierungs-Datenmenge und Speichern,

g) Wiederholen der Schritte c) bis g) für alle Teilmengen,

h) Erzeugen eines globalen Modells mithilfe des sensitiven Teil-Parameters der jeweiligen Validierungs-Datenmengen,

i) Bereitstellen des globalen Modells vom Server an den Klienten und Betreiben des technischen Geräts (TD1) durch den Klienten mit dem globalen Modell.

**FIG 4**

**Beschreibung**

*Unabhängig vom grammatikalischen Geschlecht eines bestimmten Begriffes sind Personen mit männlicher, weiblicher oder anderer Geschlechteridentität mit umfasst.*

Die Erfindung betrifft ein computer-implementiertes Verfahren und ein System zum Betrieb eines technischen Geräts mit einem Modell auf Basis künstlicher Intelligenz durch ein System, umfassend einen Server mit einem Server-Prozessor und einem Server-Speicher, und einen Klienten mit einem Klienten-Prozessor und einem Klienten-Speicher.

Die Erfindung betrifft ferner ein Computer-Programmprodukt.

Maschinelles Lernen, kurz "ML" ist in industriellen Anwendungen, wie der Qualitätsprüfung oder der Erkennung von Anomalien weit verbreitet, insbesondere bei der visuellen Qualitätsprüfung durch elektrooptische optische Sensoren oder Bildsensoren.

Es gibt im industriellen Umfeld Szenarien, bei welchen mehrere Produktionsstandorte möglicherweise dieselbe ML-Anwendung erfordern, wie beispielsweise bei der Erkennung von Anomalien ähnlicher Produkte.

Dabei kann das Trainieren eines einzelnen Modells auf der Grundlage von gesammelten Daten mehrerer Produkte aus unterschiedlichen Produktionsanlagen beziehungsweise Inspektionsanlagen insgesamt zu einem verbesserten ML-Modell führen.

Beispielswiese werden in einer herkömmlichen ML-Pipeline einer industriellem optischen Qualitätsprüfung meist Trainingsdaten von Produktionsstandorten gesammelt und ein Modell mit diesen Datenelementen trainiert.

Das trainierte Modell wird dann für die Vorhersage während der Testphase verwendet.

In den meisten Fällen unterscheiden sich die Testdaten jedoch in industriellen Domänen von den Trainingsdaten, das heißt es gibt häufig eine Verteilungsverschiebung in den Daten.

Beispielsweise kann in optisch erfassten Bilddaten eine derartige Verteilungsverschiebung auf unterschiedliche Aufhellung, Beleuchtung, Kameraverschiebung, Hintergrundänderungen für Bilder oder Sensorverschiebung für Zeitreihendaten zurückzuführen sein.

Dies Verschiebung der Testdatenverteilung kann zu einer Fehlklassifizierung des Modells führen und das Modell muss bei der Identifizierung der Verschiebung in der Datenverteilung angepasst werden.

Im Stand der Technik ist es bekannt, beispielsweise durch ein erneutes Training durchzuführen, wenn eine Verschiebung in den verwendeten Testdaten erkannt wird, jedoch erfordert dieses erneute Training einen hohen Aufwand und eine große Anzahl an relevanten Testdaten, insbesondere zur Bestimmung der Modell-Parameter und der Markierungen (engl. "label").

Im Stand der Technik ist es auch bekannt, beispielsweise die Testzeit ausschließlich durch normierte Parameter anzupassen, was einige Probleme lösen kann, jedoch nur dann erfolgreich ist, wenn sich die normierten Parameter während dem Testen ändern.

Im Stand der Technik ist es ferner bekannt, beispielsweise durch Meta-Learning ein Meta-Modell basierend auf Daten mehrerer Aufgaben zu trainieren, was jedoch eine sehr große Anzahl an Daten und Aufgaben während dem Training erfordert und dementsprechend aufwändig und komplex ist.

Es ist daher Aufgabe der Erfindung eine Lösung bereitzustellen, durch welche ein individuelles Lernen im Kontext eines föderierten Lernens verbessert wird, und jeder Klient von FL und Wissensaustausch profitiert.

Die Aufgabe wird durch ein Verfahren eingangs genannter Art gelöst, wobei folgende Schritte vom Server ausgeführt werden:

a) Bereitstellen von Testdaten an den Server und Unterteilen der Testdaten in zumindest zwei Teilmengen,

b) Zuordnen der zumindest zwei Teilmengen zu einer ersten Testdatenmenge und zumindest einer zweiten Testdatenmenge, wobei die erste Testdatenmenge im Verfahren bisher noch nicht zum Erzeugen einer Validierungs-Datenmenge herangezogen wurde, und

c) Anwenden einer Kreuz-Validierungs-Operation auf die erste Testdatenmenge und dadurch Erzeugen der Validierungs-Datenmenge,

d) Erzeugen und Trainieren eines Teil-Modells auf Basis künstlicher Intelligenz mithilfe einer Trainings-Datenmenge, welche durch die Differenz zwischen den Test-daten und der Validierungs-Datenmenge gebildet ist,

e) Berechnen einer Genauigkeit des Teil-Modells mithilfe der Validierungs-Datenmenge,

f) Bestimmen der Gradienten der Modell-Parameter des Teil-Modells und Bestimmen zumindest eines ausgewählten Gradienten der Modell-Parameter des Teil-Modells, welcher außerhalb eines vordefinierten Wertebereichs liegt, als zumindest ein sensitiver Teil-Parameter für die Validierungs-Datenmenge und Speichern im Speicher,

g) Wiederholen der Schritte c) bis g) für alle Teilmengen,

h) Erzeugen eines globalen Modells mithilfe der zumindest einen sensitiven Teil-Parameter der jeweiligen Validierungs-Datenmengen,

i) Bereitstellen des globalen Modells vom Server an den Klienten und Betreiben des technischen Geräts durch den Klienten mit dem globalen Modell.

Die Erfindung basiert auf dem Prinzip ein ML-Modell während der Testzeit anzupassen.

Dadurch ist es möglich, dass das globale Modell nur nicht-sensitive Modell-Parameter berücksichtigt und somit ein sehr robustes globales Modell gebildet werden kann.

Das Verfahren verbessert die Effizient und vereinfacht den Stand der Technik, indem nur eine eingeschränkte Anzahl an Parametern für ein erneutes Training angewendet werden muss.

Eine Modell-Anpassung ist sehr flexibel, da einige Parameter bereits während dem Training identifiziert werden, ohne vorab eine Annahme treffen zu müssen, welche nicht immer die optimale Wahl darstellt.

Ferner ist der erfindungsgemäße Ansatz energieeffizienter, da nur unempfindliche Parameter an den Server gesendet werden, und nicht alle Parameter, wodurch Kommunikationskosten gespart werden.

In einer Weiterbildung der Erfindung ist es vorgesehen, dass die Teilmengen jeweils gleich groß sind.

Dadurch ist es auf einfache Weise möglich, sensitive Parameter effizient zu berechnen, da die einzelnen Berechnungsrunden stets annähernd gleich rechenintensiv sind.

In einer Weiterbildung der Erfindung ist es vorgesehen, dass das System zumindest zwei mit dem Server verbundene Klienten umfasst, und für die Klienten jeweils ein Leistungs-Indikator bereitgestellt wird, welcher die Rechenleistung und/oder die Speicherleistung und/oder die aktuelle Verfügbarkeit des jeweiligen Klienten darstellt, und Schritt d) durch eine Rechenvorrichtung ausgeführt wird, welche von dem Klienten-Prozessor des Klienten mit dem höchsten Leistungs-Indikator unter den Klienten umfasst ist.

Dadurch ist es möglich, die Rechenaufgaben von dem Klienten ausführen zu lassen, um Ressourcen am Server zu sparen oder die Rechenleistung auf verschiedene verteilte Prozessoren zu verteilen, wodurch eine verbesserte Auslastung der verfügbaren Ressourcen erreicht werden kann.

Dabei können die Testdaten auch lokal verfügbar sein, beispielsweise wenn diese dort bereitgestellt oder erfasst werden, wodurch teilweise eine effiziente, kostengünstige lokale Berechnung durchgeführt werden kann.

In einer Weiterbildung der Erfindung ist es vorgesehen, dass der vordefinierten Wertebereich zumindest durch die Normalverteilung von mehreren Gradienten in mehreren Durchläufen des Verfahrens festgelegt ist.

Dadurch ist es möglich, den Verlauf der ersten und zweiten Genauigkeit über mehrere Durchläufe der Verfahrensschritte zu verfolgen und dynamisch auf Änderungen zu reagieren.

Die erfindungsgemäße Aufgabe wird auch durch System zum Betrieb eines technischen Geräts mit einem Modell auf Basis künstlicher Intelligenz, das System umfassend einen Server mit einem Server-Prozessor und einem Server-Speicher, und einen Klienten mit einem Klienten-Prozessor und einem Klienten-Speicher, wobei das System dazu eingerichtet ist, das erfindungsgemäße Verfahren auszuführen.

In einer Weiterbildung der Erfindung ist es vorgesehen, dass Schritt d) durch eine Rechenvorrichtung ausgeführt wird, welche vorzugsweise vom Klienten-Prozessor umfasst ist.

In einer Weiterbildung der Erfindung ist es vorgesehen, dass das System zumindest zwei mit dem Server verbundene Klienten umfasst, und der Schritt d) in einem ersten Durchlauf der Verfahrens-Schritte b) bis f) von einem der zumindest zwei Klienten ausgeführt wird, und der Schritt d) in einer Wiederholung durch Schritt g) von einem anderen der zumindest zwei Klienten ausgeführt wird.

Dadurch ist es möglich, die Rechenaufgaben von verschiedenen Klienten ausführen zu lassen, um Ressourcen am Server zu sparen oder die Rechenleistung auf verschiedene verteilte Prozessoren zu verteilen, wodurch eine verbesserte Auslastung der verfügbaren Ressourcen erreicht werden kann.

Dabei können die Testdaten auch lokal verfügbar sein, beispielsweise wenn diese dort bereitgestellt oder erfasst werden, wodurch teilweise eine effiziente, kostengünstige lokale Berechnung durchgeführt werden kann.

Die erfindungsgemäße Aufgabe wird auch durch ein Computer-Programm-Produkt mit darin gespeicherten maschinenlesbaren Anweisungen gelöst, die, wenn sie von einer Verarbeitungseinheit ausgeführt werden, diese veranlassen, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:

Fig. 1    ein Beispiel für bereitgestellte Testdaten TD und deren Verarbeitung,

Fig. 2    ein Ausführungsbeispiel für einen Teil der weiteren Verarbeitung im Verfahren dar,

Fig. 3    ein Beispiel für ein erfindungsgemäßes System,

Fig. 4    ein Beispiel für ein Ablaufdiagramm des erfindungsgemäßen Verfahrens.

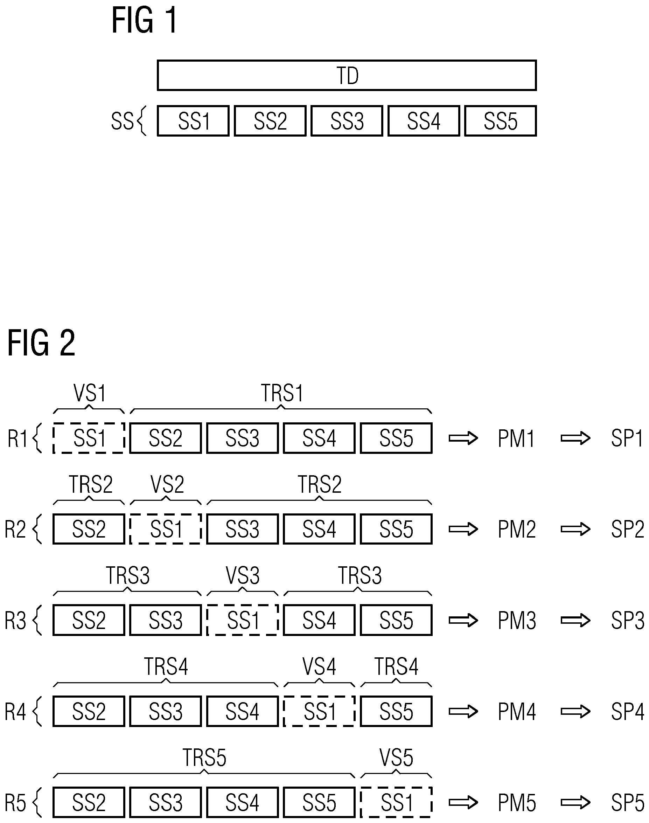

**Fig. 1** zeigt ein Beispiel für bereitgestellte Testdaten TD, welche im erfindungsgemäßen Verfahren in Teilmengen SS in Form einer erste Testdatenmenge SS1 und vier weiteren zweiten Testdatenmengen SS2-SS5 unterteilt werden, also Teilmengen gebildet werden.

Die Zuordnung der Testdatenmengen SS1-SS5 ist jedoch nur für einen ersten Durchlauf des Verfahrens repräsentativ; in weiteren Wiederholungen des Verfahrens werden die Testdatenmengen SS1-SS5 erneut zugeordnet.

Diese beiden Schritte bilden im erfindungsgemäßen Verfahren die Schritte a) und b).

**Fig. 2** stellt ein Ausführungsbeispiel für einen Teil der weiteren Verarbeitung im Verfahren dar.

Zunächst wird ein erster Durchlauf R1 von Verfahrensschritten beschrieben.

Es werden als Schritt a) im erfindungsgemäßen Verfahren die Testdaten TD in zumindest zwei Teilmengen unterteilt.

Dann erfolgt als Schritt b) im erfindungsgemäßen Verfahren ein Zuordnen der zumindest zwei Teilmengen zu einer ersten Testdatenmenge SS1 und zumindest einer zweiten Testdatenmenge SS2-SS5.

Dabei ist es jedoch vorgesehen, dass die erste Testdatenmenge SS1 im Verfahren bisher noch nicht zum Erzeugen einer Validierungs-Datenmenge VS1-VS5 herangezogen wurde, was beim ersten Durchlauf R1 dieses Verfahrensschritt vorliegt.

Anschließend wird als Schritt c) im erfindungsgemäßen Verfahren eine Kreuz-Validierungs-Operation auf die erste Testdatenmenge SS1 angewendet.

Anschließend wird als Schritt d) im erfindungsgemäßen Verfahren ein Teil-Modell PM1 auf Basis künstlicher Intelligenz mithilfe einer Trainings-Datenmenge TRS1 erzeugt und trainiert.

Die Trainings-Datenmenge TRS1 ist durch die Differenz zwischen den Testdaten TD und der Validierungs-Datenmenge VS1 gebildet.

Dann wird als Schritt e) im erfindungsgemäßen Verfahren eine Genauigkeit des Teil-Modells PM1 mithilfe der Validierungs-Datenmenge VS1 berechnet.

Nachfolgend werden als Schritt f) im erfindungsgemäßen Verfahren Gradienten der Modell-Parameter des Teil-Modells PM1 bestimmt.

Anschließend wird zumindest ein ausgewählter Gradient der Modell-Parameter des Teil-Modells PM1 bestimmt, welcher außerhalb eines vordefinierten Wertebereichs liegt.

Dieser dient als zumindest ein sensitiver Teil-Parameter SP1 für die Validierungs-Datenmenge, welcher gespeichert wird.

Anschließend werden die zuvor genannten Schritte für alle Teilmengen SS1-SS5 wiederholt.

In den folgenden Wiederholungs-Runden R2-R5 werden also die Schritte c) bis f) im erfindungsgemäßen Verfahren wiederholt:

c) Anwenden einer Kreuz-Validierungs-Operation auf die erste Testdatenmenge SS1 und dadurch Erzeugen der Validierungs-Datenmenge VS1,

d) Erzeugen und Trainieren eines Teil-Modells auf Basis künstlicher Intelligenz mithilfe einer Trainings-Datenmenge TRS1-TRS5, welche durch die Differenz zwischen den Testdaten TD und der Validierungs-Datenmenge VS1-VS5 gebildet ist,

e) Berechnen einer Genauigkeit des jeweiligen Teil-Modells PM2-PM5 mithilfe der jeweiligen Validierungs-Datenmenge VS1-VS5,

f) Bestimmen der jeweiligen Gradienten der Modell-Parameter des jeweiligen Teil-Modells PM2-PM5 und Bestimmen zumindest eines ausgewählten Gradienten der Modell-Parameter des Teil-Modells PM2-PM5, welcher außerhalb eines vordefinierten Wertebereichs liegt, als zumindest ein sensitiver Teil-Parameter SP2-SP5 für die Validierungs-Datenmenge und Speichern.

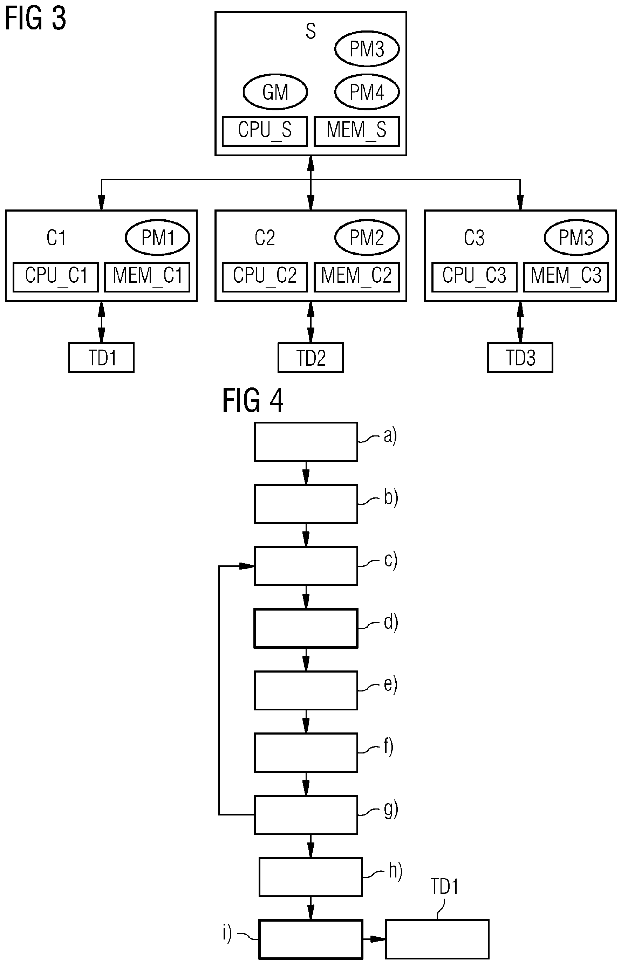

**Fig. 3** zeigt ein Beispiel für ein erfindungsgemäßes System, umfassend einen Server S und drei Klienten C1-C3.

Allgemein handelt es sich um ein Klienten-Server-System zum Betreiben von technischen Geräten TD1-TD3 mit einem Modell auf Basis künstlicher Intelligenz durch einen jeweiligen Klienten C1-C3 des Klienten-Server-Systems.

Das umfasst einen Server S mit einem Server-Prozessor CPU_S und einem Server-Speicher MEM_S, und Klienten C1-C3 mit jeweils einem Klienten-Prozessor CPU_C1-CPU_C3 und jeweils einem Klienten-Speicher MEM_C1-MEM_C3.

Das System ist dazu eingerichtet, das erfindungsgemäße Verfahren auszuführen.

In einem optionalen Ausführungsbeispiel können von den Klienten C1-C3 beziehungsweise deren Klienten-Prozessoren CPU_C1-CPU_C3 Berechnungen wie die von Teil-Modellen PM1, PM2 und PM5 ausgeführt werden.

Der Server S berechnet in diesem Fall Teil-Modelle PM3 und PM4.

Fig. 4 stellt ein Beispiel für ein Ablaufdiagramm des vollständigen erfindungsgemäßen Verfahrens dar.

Das Verfahren dient zum Betrieb des technischen Geräts TD1 mit einem Modell auf Basis künstlicher Intelligenz durch den Klienten C1.

Das technische Gerät TD1 ist von dem System umfasst.

Folgende Schritte werden vom Server S ausgeführt:

a) Bereitstellen von Testdaten TD an den Server S und Unterteilen der Testdaten TD in zumindest zwei Teilmengen,

b) Zuordnen der zumindest zwei Teilmengen zu einer ersten Testdatenmenge SS1 und zumindest einer zweiten Testdatenmenge SS2-SS5, wobei die erste Testdatenmenge SS1 im Verfahren bisher noch nicht zum Erzeugen einer Validierungs-Datenmenge VS1-VS5 herangezogen wurde,

c) Anwenden einer Kreuz-Validierungs-Operation auf die erste Testdatenmenge SS1 und Erzeugen der Validierungs-Datenmenge VS1-VS5,

d) Erzeugen und Trainieren eines Teil-Modells auf Basis künstlicher Intelligenz mithilfe einer Trainings-Datenmenge TRS1-TRS5, welche durch die Differenz zwischen den Testdaten TD und der Validierungs-Datenmenge VS1-VS5 gebildet ist,

e) Berechnen einer Genauigkeit des jeweiligen Teil-Modells PM1-PM5 mithilfe der jeweiligen r Validierungs-Datenmenge VS1-VS5,

f) Bestimmen der jeweiligen Gradienten der Modell-Parameter des jeweiligen Teil-Modells PM1-PM5 und Bestimmen zumindest eines ausgewählten Gradienten der Modell-Parameter des Teil-Modells PM1-PM5, welcher außerhalb eines vordefinierten Wertebereichs liegt, als zumindest ein sensitiver Teil-Parameter SP1-SP5 für die Validierungs-Datenmenge und Speichern im Speicher MEM_S,

g) Wiederholen der Schritte c) bis g) für alle Teilmengen SS1-SS5,

h) Erzeugen eines globalen Modells GM mithilfe des zumindest einen sensitiven Teil-Parameters SP1-SP5 der jeweiligen Validierungs-Datenmengen VS1-VS5,

i) Bereitstellen des globalen Modells GM vom Server S an den Klienten C1 und Betreiben des technischen Geräts TD1 durch den Klienten C1 mit dem globalen Modell GM.

Der vordefinierte Wertebereich kann beispielsweise ein Mittelwert aus vorher durchgeführten Analysen sein, oder ein Mindestwert oder Maximalwert oder ähnliches.

Beim Verfahren können die Teilmengen SS1-SS5 jeweils gleich groß sein, also jeweils gleich viele Elementen enthalten.

Schritt d) kann optional auch durch eine Rechenvorrichtung ausgeführt werden, wie beispielsweise vom Klienten-Prozessor CPU_C1, in der Figur ist eine Ausführung durch einen Klienten mit stärkerer Umrahmung dargestellt.

Für die Klienten C1-C3 kann optional jeweils ein Leistungs-Indikator bereitgestellt werden, welcher die Rechenleistung und/oder die Speicherleistung und/oder die aktuelle Verfügbarkeit des jeweiligen Klienten C1-C3 darstellt.

Dann kann Schritt d) durch eine Rechenvorrichtung ausgeführt werden, welche von dem Klienten-Prozessor des Klienten mit dem höchsten Leistungs-Indikator unter den Klienten C1-C3 gebildet ist.

Das System weist in diesem Ausführungsbeispiels drei mit dem Server S verbundene Klienten C1-C3 auf.

Somit kann der Schritt d) in einem ersten Durchlauf der Verfahrens-Schritte b) bis f) vom Klienten C1 ausgeführt werden, und der Schritt d) in einer Wiederholung durch Schritt g) vom Klienten C2.

Dadurch kann eine Lastverteilung der Rechenaufgaben erreicht werden und das System insgesamt effizienter betrieben werden.

Wenn nur nicht-sensitive Modell-Parameter zur Modell-Bildung verwendet werden, kann ein sehr robustes globales Modell GM erhalten werden.

Sensitive Parameter können während des Trainings im Schritt d) ermittelt werden, indem zunächst die Menge an sensitiven Parameter als leer gesetzt wird, also bei Beginn des Verfahrens dementsprechend eine Leere Menge für die Menge an sensitiven Parametern im Speicher gespeichert wird.

Dann erfolgt die zuvor erläuterte Bildung von Teilmengen aus den bereitgestellten Testdaten.

Für jeden Durchlauf der Kreuz-Validierungs-Operation im Schritt c) und beim Trainieren eines Teil-Modells im Schritt d) kann eine Optimierung des ML-Modells, insbesondere bei einem neuronalen Netzwerk, aufgrund des Gradienten der Modell-Parameter erfolgen.

$$\theta' := \theta - \alpha \, \nabla_\theta \, \mathcal{L}(f_\theta; \{X^{train}, Y^{train}\})$$

Dabei ist es Ziel, die sensitiven Parameter zu identifizieren.

Als Kriterium für das Vorliegen eines sensitiven Parameters in der Menge $\theta$ kann beispielsweise geprüft werden, ob der Gradient der Parameter größer ist als ein vorbestimmter Grenzwert oder ein Wertebereich, sowie der Parameter von den Merkmals-Lagen (engl. "feature layer") des trainierten Modells umfasst ist. Trifft dies zu, so wird der Parameter als sensitiver Parameter erkannt.

Mit anderen Worten kann die Bestimmung von sensitiven Parametern anhand einer Gradienten-Bestimmung der einzelnen Modell-Parameter erfolgen. Es können vorbestimmte Wertebereichen herangezogen werden, um einen sensitiven Parameter zu bestimmen.

Das Modell wird im Schritt d) beispielsweise nur dann angepasst, wenn für das Modell ein Vertrauens-Wert (engl. "confidence value") während des Trainings angegeben werden kann, welcher unter einem vorgegebenen Schwellwert oder außerhalb eines vorgegebenen Wertebereichs liegt.

Nachdem das Modell nur für eine Menge an Parametern angepasst wird, werden weniger Testdaten benötigt, als wenn das Modell mithilfe des gesamten Testdatensatzes TD trainiert werden würde.

Ferner müssen für die Testdaten TD keine Markierungen (engl. "label") erzeugt werden, was das Verfahren erheblich vereinfacht und weniger komplex ist.

Zudem liefert das angepasste Modell ein höheres Vertrauen auf die Testdaten, macht es also robuster.

**Bezugszeichenliste:**

| | |
|---|---|
| C1-C3 | Klient |
| CPU_S, CPU_C1-CPU_C3 | Prozessor |
| GM | globales Modell |
| MEM_S, MEM_C1-MEM_C3 | Speicher |
| PM1-PM5 | Teilmodell |
| R1-R5 | Durchlauf (engl, "round") bzw. Wiederholung |
| S | Server |
| SP1-SP5 | sensitiver Parameter |
| SS, SS1-SS5 | Teilmenge (engl. "subset") |
| TD | Test-Daten |
| TD1-TD3 | technisches Gerät |
| TRS1-TRS5 | Trainings-Datenmenge |
| VS1-VS5 | Validierungs-Datenmenge |

**Patentansprüche**

1. Computer-implementiertes Verfahren zum Betrieb eines technischen Geräts (TD1) mit einem Modell auf Basis künstlicher Intelligenz durch ein System, umfassend einen Server (S) mit einem Server-Prozessor (CPU_S) und einem Server-Speicher (MEM_S), und einen Klienten (C1) mit einem Klienten-Prozessor (CPU_C1) und einem Klienten-Speicher (MEM_C1), und folgende Schritte vom Server (S) ausgeführt werden:

   a) Bereitstellen von Testdaten (TD) an den Server (S) und Unterteilen der Testdaten (TD) in zumindest zwei Teilmengen,
   b) Zuordnen der zumindest zwei Teilmengen zu einer ersten Testdatenmenge (SS1) und zumindest einer zweiten Testdatenmenge (SS2-SS5), wobei die erste Testdatenmenge (SS1) im Verfahren bisher noch nicht zum Erzeugen einer Validierungs-Datenmenge (VS1-VS5) herangezogen wurde,
   c) Anwenden einer Kreuz-Validierungs-Operation auf die erste Testdatenmenge (SS1) und dadurch Erzeugen der Validierungs-Datenmenge (VS1-VS5),
   d) Erzeugen und Trainieren eines Teil-Modells (PM1-PM5) auf Basis künstlicher Intelligenz mithilfe einer Trainings-Datenmenge (TRS1-TRS5), welche durch die Differenz zwischen den Testdaten (TD) und der Validierungs-Datenmenge (VS1-VS5) gebildet ist,
   e) Berechnen einer Genauigkeit des Teil-Modells (PM1-PM5) mithilfe der Validierungs-Datenmenge (VS1-VS5),
   f) Bestimmen der Gradienten der Modell-Parameter des Teil-Modells (PM1-PM5) und Bestimmen zumindest eines ausgewählten Gradienten der Modell-Parameter des Teil-Modells (PM1-PM5), welcher außerhalb eines vordefinierten Wertebereichs liegt, als zumindest ein sensitiver Teil-Parameter (SP1-SP5) für die Validierungs-Datenmenge und Speichern im Speicher (MEM_S),
   g) Wiederholen (R2-R5) der Schritte c) bis g) für alle Teilmengen (SS1-SS5),
   h) Erzeugen eines globalen Modells (GM) mithilfe des zumindest einen sensitiven Teil-Parameters (SP1-SP5) der jeweiligen Validierungs-Datenmengen (VS1-VS5),
   i) Bereitstellen des globalen Modells (GM) vom Server (S) an den Klienten (C1) und Betreiben des technischen Geräts (TD1) durch den Klienten (C1) mit dem globalen Modell (GM).

2. Verfahren nach dem vorhergehenden Anspruch, wobei die Teilmengen (SS1-SS5) jeweils gleich groß sind.

3. Verfahren nach einem der vorhergehenden Ansprüche, wobei das System zumindest zwei mit dem Server (S) verbundene Klienten (C1-C3) umfasst, und für die Klienten (C1-C3) jeweils ein Leistungs-Indikator bereitgestellt wird, welcher die Rechenleistung und/oder die Speicherleistung und/oder die aktuelle Verfügbarkeit des jeweiligen Klienten (C1-C3) darstellt, und Schritt d) durch eine Rechenvorrichtung ausgeführt wird, welche von dem Klienten-Prozessor (CPU_C1-CPU_C3) des Klienten (C1-C3) mit dem höchsten Leistungs-Indikator unter den Klienten (C1-C3) umfasst ist.

4. System zum Betrieb eines technischen Geräts (TD1) mit einem Modell auf Basis künstlicher Intelligenz, das System umfassend einen Server (S) mit einem Server-Prozessor (CPU_S) und einem Server-Speicher (MEM_S), und einen Klienten (C1) mit einem Klienten-Prozessor (CPU_C1) und einem Klienten-Speicher (MEM_C1), wobei das System dazu eingerichtet ist, das Verfahren nach einem der vorhergehenden Ansprüche auszuführen.

5. System nach dem vorhergehenden Anspruch, wobei Schritt d) durch eine Rechenvorrichtung ausgeführt wird, welche vorzugsweise vom Klienten-Prozessor (CPU_C1) umfasst ist.

6. System nach dem vorhergehenden Anspruch, wobei das System zumindest zwei mit dem Server (S) verbundene Klienten (C1-C3) umfasst, und der Schritt d) in einem ersten Durchlauf der Verfahrens-Schritte b) bis f) von einem der zumindest zwei Klienten (C1) ausgeführt wird, und der Schritt d) in einer Wiederholung durch Schritt g) von einem anderen der zumindest zwei Klienten (C2) ausgeführt wird.

7. Computer-Programm-Produkt mit darin gespeicherten maschinenlesbaren Anweisungen, die, wenn sie von einer Verarbeitungseinheit ausgeführt werden, diese veranlassen, das Verfahren nach einem der Ansprüche 1 bis 3 auszuführen.

# FIG 1

# FIG 2

FIG 3

S

GM    PM3
      PM4
CPU_S    MEM_S

C1    PM1
CPU_C1    MEM_C1

C2    PM2
CPU_C2    MEM_C2

C3    PM3
CPU_C3    MEM_C3

TD1

TD2

TD3

FIG 4

a)

b)

c)

d)

e)

f)

g)

h)

i)    TD1

**EUROPÄISCHER RECHERCHENBERICHT**

Nummer der Anmeldung

EP 23 17 7606

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Dengsheng Chen ET AL: "ELASTIC AGGREGATION FOR FEDERATED OPTIMIZATION", , 14. Februar 2023 (2023-02-14), XP093100338, Gefunden im Internet: URL:https://openreview.net/pdf?id=EWjYk3R2jhr [gefunden am 2023-11-10] * Seite 1 - Seite 10 * ----- | 1-7 | INV. G06N20/20 G06N3/045 ADD. G06N3/084 |
| A | THEO CHOW ET AL: "FLARE: Detection and Mitigation of Concept Drift for Federated Learning based IoT Deployments", ARXIV.ORG, CORNELL UNIVERSITY LIBRARY, 201 OLIN LIBRARY CORNELL UNIVERSITY ITHACA, NY 14853, 15. Mai 2023 (2023-05-15), XP091508762, * Seite 1 - Seite 7, linke Spalte, Absatz 2 * ----- | 1-7 | |
| A | XUE YE ET AL: "Aggregation Delayed Federated Learning", 2022 IEEE INTERNATIONAL CONFERENCE ON BIG DATA (BIG DATA), IEEE, 17. Dezember 2022 (2022-12-17), Seiten 85-94, XP034282476, DOI: 10.1109/BIGDATA55660.2022.10020641 [gefunden am 2023-01-26] * das ganze Dokument * ----- | 1-7 | RECHERCHIERTE SACHGEBIETE (IPC) G06N |
| A | US 2021/365841 A1 (SHALOUDEGI KIARASH [CA] ET AL) 25. November 2021 (2021-11-25) * das ganze Dokument * ----- | 1-7 | |

Der vorliegende Recherchenbericht wurde für alle Patentansprüche erstellt

| Recherchenort | Abschlußdatum der Recherche | Prüfer |
|---|---|---|
| Den Haag | 13. November 2023 | Volkmer, Markus |

EPO FORM 1503 03.82 (P04C03)

# EP 4 475 047 A1

**ANHANG ZUM EUROPÄISCHEN RECHERCHENBERICHT
ÜBER DIE EUROPÄISCHE PATENTANMELDUNG NR.**  EP 23 17 7606

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-11-2023

| Im Recherchenbericht angeführtes Patentdokument | Datum der Veröffentlichung | Mitglied(er) der Patentfamilie | Datum der Veröffentlichung |
|---|---|---|---|
| US 2021365841 A1 | 25-11-2021 | CN 115552432 A | 30-12-2022 |
| | | EP 4143752 A1 | 08-03-2023 |
| | | US 2021365841 A1 | 25-11-2021 |
| | | WO 2021233030 A1 | 25-11-2021 |

Für nähere Einzelheiten zu diesem Anhang : siehe Amtsblatt des Europäischen Patentamts, Nr.12/82